# EUROPEAN PATENT SPECIFICATION

(11) **EP 3 136 363 B1**
(45) Date of publication and mention of the grant of the patent: **18.07.2018**
(21) Application number: 16186251.1
(22) Date of filing: 10.03.2006
(51) Int. Cl.: G08B 21/18, G05B 23/02, H04L 12/28

(54) **ACCESSORY CONTROLLING AND TRACKING THE OPERATION OF HOUSEHOLD APPLIANCES AND ENTERTAINMENT EQUIPMENT**
ZUBEHÖRSTEUERUNG UND VERFOLGUNG DES BETRIEBS VON HAUSHALTSGERÄTEN UND UNTERHALTUNGSAUSRÜSTUNG
ACCESSOIRE DE COMMANDE ET DE SUIVI DU FONCTIONNEMENT D'APPAREILS MENAGERS ET EQUIPEMENT DE DIVERTISSEMENT

(30) Priority: 17.03.2005 FI 20050285
(43) Date of publication of application: 01.03.2017
(62) Divisional of application: 06709000.1
(73) Proprietor: Innohome Oy, 02600 Espoo (FI)
(72) Inventor: MYLLYMÄKI, Matti, 02600 Espoo (FI)
(74) Representative: LEITZINGER OY

(56) References cited:
- EP-A1- 1 485 652
- JP-A- 2001 054 176
- US-A1- 2004 093 125

## Description

The most serious safety hazards at home are fires, the protection against which has been traditionally provided by automation and security systems, as well as by various safety devices. Automation systems involve the use of fire and smoke detectors for monitoring an object under surveillance and, if necessary in the event of an accident, the supply of power to the object is discontinued and an alarm is set off. Some domestic electrical appliances also have separate safety devices available, aimed at reducing safety hazards. Such devices include e.g. safety devices attached to a kitchen range, which disconnect the power supply in case the range is in active status for too long at high output or heats up too much, or if a motion detector connected therewith does not register any user activity within a given period of time. Various automatically and manually activated timers are also used for protecting electrical equipment. The most common fire safety device is a statutory smoke alarm, several of which are found in almost every home nowadays. Accessories for data transfer in fire alarms are also available, making use of audio or radio frequencies or real-line communication links.

It is previously known from publication US 2004/093125 A1 an apparatus for power-management control monitoring and analyzing operational characteristics.

Further the publication JP 2001 054176 discloses a power control system for home electric appliances, wherein a plurality of appliances are connected in parallel with power distribution line.

WO 2003/074940 shows a system and method of monitoring an electric range. the risk of overheating is calculated as a function of values: time (t), current consumption (W), temperature (T), person distance (P) and smoke generation (S). The calculated risk level is compared to preset risk limits.

The most difficult problem in terms of making automated fire security systems more commonplace is a high purchase price, as well as a configuration whose installation for service requires that the solutions be anticipated as early as in the designing stage of a building or that major modifications be made to existing installations. The currently available systems also require a remarkable amount of preparatory planning work, the costs of which may represent a significant portion of the entire venture. What is common to commercially available solutions is indeed a significant amount of installation work required thereby, which may cancel the entire project. Accordingly, the commercially available safety solutions are poorly compatible with existing structures.

Another major problem involves inadequate services provided by separate and independent safety devices, as well as lack of interfaces with other equipment. In general, the safety devices only provide on/off data about overstepping a certain limit, but analog information that would enable tracking the status and consumption quantities of an appliance, is not provided thereby. The monitoring of consumption and operation requires traditionally separate devices, even if some of the desired information could be produced by shared sensors.
Monitoring the condition and operation of electrical household appliances would considerably alleviate safety hazards, yet there are no advantageous solutions available for the time being, nor have independent safety devices a capability of reporting misuse faults or malfunction of a household appliance. The misuse faults also constitute a significant hazard, regarding fire mishaps. Typical problems include switching on a wrong plate on the electric stove or inadvertently leaving it on, resulting often from a poor user interface of the electric stove. Leaving the door of a refrigerator inadvertently open may also lead to water damage, as its inadequate cleaning or thawing may cause overheating and ultimately a fire. Electrical fires are generally characterized by abundant build-up of smoke, whereby a smoke detector and disconnection of power would be efficient means of preventing a fire. A significant precaution would also be the observation of the presence or physical state of users. For example, fire accidents could be prevented by observing the fact that a user leaves the monitored area or falls asleep and by then switching off the appliances, provided that this could be done at a reasonable cost.

A common problem with smart home security solutions is the fact that such solutions do not lend themselves very well except to new buildings, in which the demands have been taken into consideration as early as in the designing stage. The configuration of smart home systems is also such that the sensors and actuators thereof at the bottom level of the system are merely technical sites and addresses, which must be defined for what they are and what they are related to and what they are used for, which is why the configuration of an entire system requires a separate designing and programming process. Often, the intelligence and controls, as well as measurements of a system are also highly centralized, the direct control and measuring of appliances demanding a separate cable system. The same applies to new IP-based household appliances, which require a local area network infrastructure for functioning. There is almost nothing available in terms of identifying the status and tracking the operation of individual household appliances, because the current system solutions do not support such services.

The subsequently described invention overcomes the above problems in such a way that the existing home appliances can be protected with respect to fire accidents, as well as failures and misuse faults, by means of a simple accessory attachable to a power connection. According to the present invention the accessory is configured to verify the active presence of a user by monitoring the use of the appliance. The accessory identifies the status of an appliance linked thereto and that of its environment on the basis of a standard audio alarm or other known communication provided by its own existing sensors, as well as by independent smoke, gas, carbon monoxide and overheating alarm devices. The accessories can be used to monitor also the condition of a user by tracking operating data provided by other peripherals. By means of fixed and wireless sensors, the accessory monitors the energy consumption as well as the ambience of an appliance attached thereto, and also uses the information obtained thereby for independently controlling service energy connections. By virtue of the invention, the peripheral alarms may comprise presently existing or economical standard solutions without demanding a separate cable system. By virtue of a dedicated smartness of the accessory, there is no need for a separate central processing unit, operating panels or planning process, either. By virtue of the inventive solution, the accessory can also be installed within a few minutes and is able to detect abnormal conditions without a more extensive automation or security system, as well as to control and supervise independently the operation of an appliance connected thereto.

The accessory is also capable of learning the power consumption, as well as the active cycles of an appliance connected thereto, and begins to monitor the same.

Upon detecting a significant deviation, it produces a local or distant alarm by using prior known data transfer solutions. Making use of the data transfer, the accessories are capable of interactive dialog and, if necessary, with a home automation and security system, yet function independently in control incidents which require a quick response. Thus, for example, the presence of a user can be transmitted by a home/away switch placed at the doorway and the state of sleep by a bed sensor, or both by means of a portable smart bracelet capable of identifying presence and sleep and communicating in a wireless fashion. The status data is transmitted non-urgently by prior known data transfer and the actual high-speed operative control can be performed on site. The active presence of a user is verified by monitoring the use of electrical equipment, as well as by transmitting the information to other peripherals by way of interactive communication therebetween.

The invention provides also a safety precaution by upgrading and simplifying the user interfaces of household appliances. For example, a kitchen range can be protected from being misused by children or demented persons in such a way that the activated status of a range ventilator light or a fan is used for controlling the range. Thus, the range is only connected to power supply when the range ventilator is on. At the same time, a light and audio signal is obtained, indicating when the range is in operation, nor is it so likely to be left inadvertently in active status, and the user can be sure that the range is inactivated whenever he/she turns off the range ventilator. When a person is leaving the apartment or going to bed, the accessories of the invention make it possible to provide a reminder of the active status of themselves before being disconnected from power supply by the automation. Reminding automatically about the soiling of the condenser of a refrigerator or freezer, about excessive build-up of ice or about the door left ajar is possible by means of the invention, thus reducing a fire hazard and conserving energy, as well as avoiding rapid wearing of the machinery. With respect to entertainment equipment, the invention can be used for indicating when the occupant is watching television or a DVD movie and for controlling the lighting automatically.

What is novel about the invention in technical sense is that, a piece of the operation control intelligence, traditionally located in a separate central processing unit, a piece enabling an independent intelligent activity, is assigned to an accessory which can be readily connected with the operating environment of an appliance to be controlled. Consequently, all information regarding the operation and operating environment of an appliance under control is readily available and enables the tracking and control of an appliance-specific, independent activity, as well as connecting the same intelligently with a more extensive configuration. The more extensive configuration, comprising several accessories, may function either as an independent pico-network and/or as a segment in a smart home system. A pico-network is something that enables a direct interactive communication between smart accessories and makes use of the interactively refined functional information without centralized extra intelligence. The accessories targeted for various household appliances are preprogrammed with desired functions and are able to identify also other peripheral equipment as well as to adapt themselves thereto, there being no need for preliminary planning or functional programming or system configurating. The accessory adapts itself also to the alarm sounds of existing alarm devices, which can thus be exploited in the system. The required installation work is also minimal with no need to touch existing fixed installations or to include any additional cable system. Because of its technical structure, the invention also enables using the accessory in all domestic appliances regardless of whether these operate on electricity or gas. Even in appliance-specific sense, the independent accessory of the invention provides more comprehensive safety solutions, as well as new services which cannot be achieved even by traditional automation and security systems with their numerous sensors and control units. The inventive technical solution also enables building a smart home based on existing previously installed facilities from appliance to appliance, beginning with independent accessories and progressing as necessary in such a way that the malfunction, consumption and alarm information of household appliances are ultimately linked with a more extensive automation or security system. The operating data of home appliances or entertainment electronics can also be exploited in the verification of users' presence and active condition, whenever it is desirable to control e.g. burglar surveillance or lighting automatically or to monitor a person's activity status in automated alarms regarding health or passivity.
The invention will now be described in more detail with reference to the accompanying drawings, which are considered to include all the features of claim 1 in which:
- Fig. 1: shows an accessory of the invention in a structural block diagram, and
- fig.2: shows how accessories of the invention operate in connection with a kitchen range and a range fan.

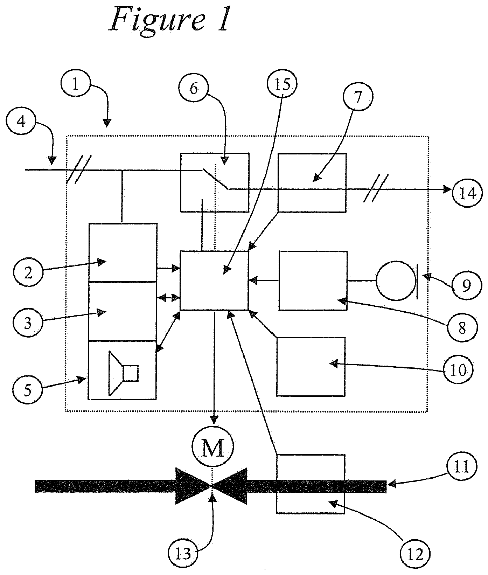

In reference to fig. 1, there is shown a block diagram for an accessory 1 of the invention, the accessory having its internal blocks within a dashed line and outside the latter are blocks intended for controlling gas, as well as for measuring a flow rate. The accessory houses a processor or a control logic 15, receiving its operating energy from a power supply 4 by way of a voltage source 2. The processor 15 monitors the ambient peripheral alarms by means of a microphone 9 and a sound detection circuit 8 or a communication unit 3 associated therewith, as well as the status of an appliance under control by measuring 7 an electric power 14 claimed thereby. Upon activating the accessory, the processor 15 adapts itself to the standard audio alarm envelopes of leakage, fire and overheating alarm devices, the latter thus needing no additional coding or communication equipment. The processor 15 monitors also a flow rate 11 of gas by means of a flow rate sensor 12. Measuring both the flow rate 12 of gas and the electrical energy claimed by the appliance is effected by using temperature sensors, the reference point therefor being constituted by a sensor 10 which measures temperature outside the appliance. The flow rate 11 of gas energy effects cooling of the sensor with respect to the reference temperature 10 whenever there is a flow, and the electrical energy claimed by the appliance in turn effects warming of the sensor 7 with respect to the reference temperature 10. A measurement of the energy claimed by the appliance can also be effected by some other prior known measuring method. The rate of gas flow, as well as that of electric power, is indicated by the magnitude of temperature change. The processor 15 learns the normal active cycles and the energy consumption of an appliance connected therewith and keeps tracking operation of the appliance on the basis of this information or data otherwise supplied therein. Upon detecting anything abnormal in the operation of an appliance connected therewith or upon identifying an alarm produced by an external alarm sensor, it guides the appliance to a status appropriate in view of a particular condition. In addition to illustrated control outputs 13, 6, the accessory may have also other control signals regarding an appliance under control, or it may practice control by way of the communication unit 3. The simultaneous tracking of several different ambient variables and the mutual correlation thereof enables a considerably more effective detection of exceptional conditions than what is achieved by traditional methods based on the threshold values of individual signals. The control of power supply for a controlled appliance can be effected by using a relay 6 or an electronic switch, such as a FET or Triak. The control of gas for a controlled appliance is effected by using a motor-driven or solenoid valve 13. In its simplest form, the local user interface can be a pilot light or a speaker or buzzer 5, by way of which can be released an alarm or status information, another feasible device being an LCD display with its control button. For the purpose of telecommunication, the accessory is provided with the communication unit 3 based on prior known data transfer solutions, which may be using e.g. an electricity main, radio frequencies or a local area network. It can be used for programming the appliance and parameters regarding its activity can be transmitted from other peripherals, a remote operating panel, or by way of an automation or security system. The status, fault and consumption data regarding an appliance under control can be transmitted forward by means of data transfer.

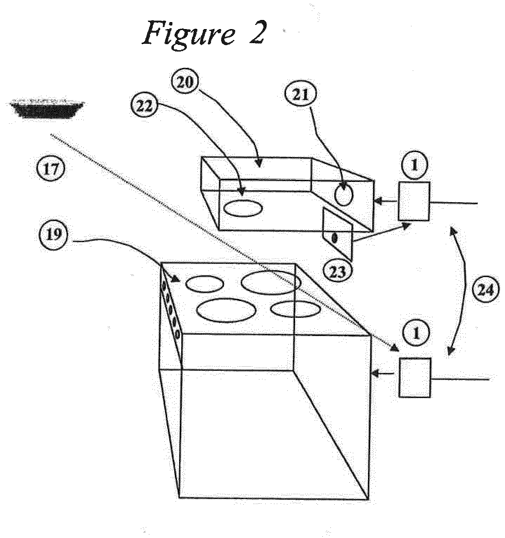

Fig. 2 shows an accessory of the invention working in connection with an electric or gas range and a range ventilator. A range 19 and a range ventilator 20 are provided with separate accessories 1 in communication with each other by way of a mains modem 23. The range accessory 1 recognizes when the range is active and communicates 24 the information to the range ventilator accessory 1, which switches a fan 21 and a lamp 22 on and switches the same off when the range is turned off. Thus, upon seeing the light and hearing the sound, the user knows when the range is active and hence is less likely to leave it on. The automatic control of a range ventilator also improves the quality of indoor air, because it always switches on automatically. The facility which houses the range is also provided with a smoke alarm 17, the range accessory 1 identifying its alarm sound and switching off the range operating energy as the smoke alarm is set off, whereby the smoldering material forgotten on a plate does not have time to catch fire. A temperature sensor 23 external of the range ventilator accessory, together with the range accessory 1, controls the power claimed by the range in relation to its radiation temperature 23 and, when the relation deviates sufficiently from what is normal, the range accessory switches the operating energy off of the range. Thus, a single plate at high output, with food simmering on top of it, does not switch off within an excessively long period as opposed to what happens with traditional range safety devices. Yet, if a plate of the range is vacant, its power supply can also be cut off considerably sooner than in traditional solutions. The temperature sensor 23 external of the range ventilator accessory and the operating power measured by the range accessory 1 are also used for controlling the speed of the range ventilator, raising it as the temperature or the power communicated 19 by the range is rising, the ventilation demand adjusting itself automatically according to the operating condition. By way of a data transfer link, on the basis of information regarding a user's presence or state of sleep and provided by a home/away switch and a bed sensor or a smart bracelet, the accessory 1 also switches the range automatically off, if necessary. When the user leaves the apartment or falls asleep, the range accessory may provide a reminder of its active status on a remote operating panel or a smart bracelet, which may reveal it as a voice or text message before the range is automatically switched off. The range operating data can also be used for tracking the activity of occupants and particularly when analyzing the independence of demented persons.

## Claims

1. A safety system for protection against safety hazards at home, the system configured to control the operation of household appliances (subsequently appliance), comprising an accessory (1), which is located in connection with an appliance either as a separate unit or as a portion of the controlled appliance and which is attachable to an operating energy supply (4) of the appliance, and which accessory (1) includes:
- connections (3, 9) for sensors (17, 23) monitoring an operating environment of the appliance;
- measuring means (7, 12) for measuring electric power or flow rate of gas claimed by the appliance;
- a processor or a control logic (15) for processing information received by way of said connections (3, 9) and measuring results received from said measuring means (7, 12), and
- control outputs (6, 13) for controlling the operation or operating energy of the appliance,
the accessory being configured to monitor signals from said sensors and the operating status of the appliance on the basis of energy consumed by the appliance, and being configured to verify the active presence of a user by monitoring active cycles of the appliance, the accessory being assigned an operation control intelligence enabling an independent activity.

2. A system as set forth in claim 1, **characterized in that** the household appliance is an electric or gas range.

3. A system as set forth in claim 1 or 2, **characterized in that** the system is provided with several accessories (1), which communicate with each other, and that, by monitoring changes in the operating states of appliances occurring as a result of a user's actions, such accessories are capable of indicating the user's presence and activity.

4. A system as set forth in claim 1, 2 or 3, **characterized in that** the accessory (1) is configured to monitor the power consumption of the appliance in relation to radiation temperature of the appliance, and, on the basis of the monitored power consumption and radiation temperature relationship the accessory (1) is configured to switch off the power supply to the appliance.

## Patentansprüche

1. Sicherheitssystem zum Schutz vor Sicherheitsbedrohungen zuhause, wobei das System konfiguriert ist, um den Betrieb von Haushaltsgeräten (im Folgenden Gerät) zu steuern, die ein Zubehör (1) umfassen, welches in Verbindung mit einem Gerät entweder als eine separate Einheit oder als ein Teil des gesteuerten Geräts ausgeführt ist und welches mit einer Betriebsenergiezufuhr (4) des Geräts verbunden werden kann, und wobei das Zubehör (1) Folgendes beinhaltet:
- Verbindungen (3, 9) für Sensoren (17, 23), die eine Betriebsumgebung des Geräts überwachen;
- Messmittel (7, 12) zum Messen von elektrischem Strom oder der Strömungsgeschwindigkeit von Gas, die von dem Gerät beansprucht werden;
- einen Prozessor oder eine Steuerlogik (15) zum Verarbeiten von Informationen, die durch die Verbindungen (3, 9) erhalten werden, und Messen von Ergebnissen, die von den Messmitteln (7, 12) erhalten werden, und
- Steuerausgänge (6, 13) zum Steuern des Betriebs oder der Betriebsenergie des Geräts,
wobei das Zubehör konfiguriert ist, um Signale von den Sensoren und den Betriebsstatus des Geräts auf Grundlage von Energie, die von dem Gerät verbraucht wird, zu überwachen, und konfiguriert ist, um die aktive Anwesenheit eines Benutzers durch Überwachen von aktiven Zyklen des Geräts zu verifizieren, wobei dem Zubehör eine Betriebssteuerungsintelligenz zugewiesen ist, die eine unabhängige Aktivität ermöglicht.

2. System nach Anspruch 1, **dadurch gekennzeichnet, dass** das Haushaltsgerät ein Elektro- oder Gasherd ist.

3. System nach Anspruch 1 oder 2, **dadurch gekennzeichnet, dass** das System mit mehreren Zubehören (1) ausgestattet ist, die miteinander kommunizieren, und dass durch Überwachen von Änderungen der Betriebszustände von Geräten, die infolge von Aktionen eines Benutzers erfolgen, die Zubehöre fähig sind, die Anwesenheit und Aktivität des Benutzers anzuzeigen.

4. System nach Anspruch 1, 2 oder 3, **dadurch gekennzeichnet, dass** das Zubehör (1) konfiguriert ist, um den Stromverbrauch des Geräts in Bezug auf die Strahlungstemperatur des Geräts zu überwachen, und auf Grundlage des überwachten Stromverbrauch- und Strahlungstemperatur-Verhältnisses das Zubehör (1) konfiguriert ist, um die Stromzufuhr zu dem Gerät auszuschalten.

## Revendications

1. Système de sécurité destiné à protéger contre les risques d'accident domestique, le système étant configuré pour commander le fonctionnement d'appareils électroménagers (ci-après appelés appareil), comprenant un accessoire (1) disposé en connexion avec un appareil soit comme unité séparée, soit comme une partie de l'appareil commandé, laquelle peut être raccordée à une source d'énergie de fonctionnement (4) de l'appareil, et ledit accessoire (1) comprenant :
- des connexions (3, 9) pour des capteurs (17, 23) chargés de surveiller un environnement de fonctionnement de l'appareil ;
- des moyens de mesure (7, 12) destinés à mesurer une puissance électrique ou un débit de gaz attribués à l'appareil ;
- un processeur ou une logique de commande (15) pour le traitement d'informations reçues par le biais desdites connexions (3, 9) et pour mesurer des résultats reçus en provenance desdits moyens de mesure (7, 12), et
- des sorties de commande (6, 13) pour commander le fonctionnement ou l'énergie de fonctionnement de l'appareil,
- l'accessoire étant configuré pour surveiller des signaux provenant desdits capteurs et l'état de fonctionnement de l'appareil sur la base de l'énergie consommée par l'appareil, tout en étant configuré pour vérifier la présence active d'un utilisateur en surveillant des cycles actifs de l'appareil, l'accessoire étant doté d'une intelligence de commande de fonctionnement permettant une activité indépendante.

2. Système selon la revendication 1, **caractérisé en ce que** l'appareil électroménager est une cuisinière électrique ou à gaz.

3. Système selon la revendication 1 ou 2, **caractérisé en ce que** le système est muni de plusieurs accessoires (1) communiquant les uns avec les autres, et **en ce que**, par des changements de surveillance dans les états de fonctionnement d'appareils résultant d'une action d'un utilisateur, de tels accessoires sont capables d'indiquer la présence et l'activité de l'utilisateur.

4. Système selon la revendication 1, 2, ou 3, **caractérisé en ce que** l'accessoire (1) est configuré pour surveiller la consommation d'énergie de l'appareil par rapport à la température de rayonnement de l'appareil, et, sur la base de relation entre la consommation d'énergie surveillée et la température de rayonnement, l'accessoire (1) est configuré pour éteindre l'alimentation électrique de l'appareil.
